# EUROPÄISCHE PATENTSCHRIFT

(11) **EP 2 431 599 B1**
(45) Veröffentlichungstag und Bekanntmachung des Hinweises auf die Patenterteilung: **12.12.2018**
(21) Anmeldenummer: 11007153.7
(22) Anmeldetag: 02.09.2011
(51) Int. Cl.: F02K 3/075, F02K 1/38, F02K 1/48

(54) **Blütenmischer für ein Turbofantriebwerk**
Lobe mixer for a turbofan engine
Mélangeur à lobes pour un turboréacteur double flux

(30) Priorität: 16.09.2010 DE 102010045697
(43) Veröffentlichungstag der Anmeldung: 21.03.2012
(73) Patentinhaber: Rolls-Royce Deutschland Ltd & Co KG, 15827 Blankenfelde-Mahlow (DE)
(72) Erfinder: Thies, Robert, 14548 Schwielowsee (DE)
(74) Vertreter: Hoefer & Partner Patentanwälte mbB

(56) Entgegenhaltungen:
- EP-A1- 1 557 552
- WO-A1-2010/019131
- GB-A- 2 240 366
- US-A- 5 136 840
- US-A- 5 771 681

## Beschreibung

Die Erfindung betrifft einen verstellbaren Blütenmischer für ein Turbofantriebwerk zur Einstellung eines an den jeweiligen Flugzustand angepassten Mischungsverhältnisses zwischen dem Kaltluftstrom aus dem Nebenstromkanal und dem Heißluftstrom aus dem Kernstromkanal.

Die Effizienz von Turbofantriebwerken kann bekanntermaßen dadurch verbessert werden, dass der Heißgasstrom des Kerntriebwerks mit dem kalten Massenfluss des Nebenstroms vermischt wird und erst danach der gemischte Gasstrom entspannt wird. Ein weiterer Vorteil der Mischung der beiden Gasströme ist - insbesondere beim Start des Flugzeugs - die damit verbundene Verringerung des Strahllärms. Zum Vermischen der beiden Luftströme werden üblicherweise Blütenmischer eingesetzt, die einen umlaufenden Blechmantel mit sich in Längsrichtung erstreckenden, abwechselnd radial nach innen und nach außen aufgewölbten Ausbauchungen umfassen. Durch die jeweilige Form, Länge und Anzahl der Ausbauchungen bzw. der zwischen diesen gebildeten Kanäle wird die Mischungswirkung des Blütenmischers zur Vermischung des zwischen dessen Außenfläche und der Innenwand der Triebwerksgondel (Kaltstromquerschnitt) abströmenden Kaltgasstroms und des zwischen dessen Innenfläche und dem Abgaskonus (Heißstromquerschnitt) abströmenden Heißgasstroms beeinflusst. Der Kaltstromquerschnitt und der Heißstromquerschnitt eines Blütenmischers ist zudem betriebsbedingt nicht völlig konstant, da dessen stromauf an den Mischbereich des Blütenmischers anschließender rotationssymmetrischer Teil in Abhängigkeit vom Flugzustand mit einem unterschiedlich großen Kalt- bzw. Heißgasvolumenstrom beaufschlagt werden kann. Damit verbunden sind ein unterschiedliches Dehnungsverhalten des Blütenmischers und eine daraus resultierende unkontrollierte Veränderung des Mischungsverhältnisses zwischen dem Heiß- und dem Kaltluftstrom.

Die Größe des Kaltstromquerschnitts beeinflusst das Flattern des Fans des Triebwerks, das heißt, je größer der Kaltstromquerschnitt ist, umso weniger wird der Fan belastet und umso geringer ist die Gefahr des Flatterns des Fans. Außerdem hat ein geringer Kaltstromquerschnitt am Mischer zugunsten eines größeren Heißstromquerschnitts eine Verminderung des Schubs und eine Erhöhung des Lärmpegels zur Folge. Andererseits kann sich unter bestimmten Flugbedingungen auch ein verringerter Kaltstromquerschnitt, und zwar ohne in den kritischen Flatterbereich zu gelangen, vorteilhaft auf die Verbesserung des Schubes auswirken. Daher ist das üblicherweise feststehende Verhältnis zwischen dem Kaltgasquerschnitt und des Heißgasquerschnitt nur ein Kompromiss für alle auftretenden Flugzustände.

Um das Mischungsverhältnis zwischen dem Kaltgasstrom und dem Heißgasstrom auch an unterschiedliche Flugzustände anpassen zu können, schlägt die US 5771681 eine einstellbare Mischvorrichtung für Gasturbinentriebwerke zum variablen Mischen des kalten Nebenluftstroms mit dem heißen Kernluftstrom vor, die eine Vielzahl von in Umfangsrichtung aufeinander folgenden, gelenkig gehaltenen und in eine äußere Position sowie in eine innere Position verstellbaren Segmenten umfasst, um so das Mischungsverhältnis zwischen dem Heiß- und dem Kaltgasstrom zu verändern. Der Wartungs- und Kostenaufwand für die aus einer Vielzahl von Bauteilen bestehende Mischvorrichtung ist jedoch hoch.

Darüber hinaus wurden zur kontrollierten Einstellung des Mischungsverhältnisses bereits Vorrichtungen vorgeschlagen, die die Elastizität der bekannten, einstückig aus Blech gefertigten Blütenmischer nutzen und mit mechanischen Mitteln derart auf den Blütenmischer einwirken, dass das Verhältnis des Kaltstromquerschnitts zum Heißstromquerschnitt verändert wird. Jedoch ist auch in diesem Fall der Aufwand für die auf den Blütenmischer wirkenden mechanischen Stellelemente vergleichsweise hoch.

Der Erfindung liegt die Aufgabe zugrunde, einen einstellbaren Blütenmischer für ein Turbofantriebwerk so auszubilden, dass das Mischungsverhältnis zwischen dem Kaltgasstrom und dem Heißgasstrom mit geringem Aufwand optimal an den jeweiligen Flugzustand angepasst werden kann.

Erfindungsgemäß wird die Aufgabe mit einem gemäß den Merkmalen des Patentanspruchs 1 ausgebildeten Blütenmischer gelöst.

Vorteilhafte oder zweckmäßige Weiterbildungen der Erfindung sind Gegenstand der Unteransprüche.

Der Kern der Erfindung besteht darin, dass ein Teil des Kaltluftstroms und/oder des Heißluftstroms über die Innenfläche und/oder die Außenfläche des Blütenmischers geleitet wird und der Blütenmischer somit aufgrund des Temperaturunterschieds an der Innen- und Außenfläche und des dadurch bedingten Dehnungsverhaltens radial nach außen oder innen verstellt wird.

Gemäß der Erfindung umfasst der verstellbare Blütenmischer ein stromauf des dünnwandigen, gewellten Teils des Blütenmischers angeordnetes Luftleitelement zum Abzweigen eines Kaltluftteilstroms und/oder Heißluftteilstroms aus dem Nebenstromkanal und dem Kernstromkanal des Triebwerks sowie eine dem Luftleitelement zugeordnete Luftsteuereinrichtung zur Führung des abgezweigten Kaltluft- oder Heißluftstroms entlang der Innenfläche und/oder der Au-ßenfläche des Blütenmischers, um dessen gewellten Teil aufgrund der durch den Heiß- und/oder Kaltluftteilstrom bewirkten Temperaturdifferenz zwischen der Innen- und der Außenfläche radial nach innen oder nach außen auszulenken.

In weiterer Ausbildung der Erfindung umfasst die Luftsteuereinrichtung ein vom rotationssymmetrischem Teil des Blütenmischers im Wesentlichen winklig abstrebendes, umlaufendes Prallringblech mit in regelmäßigem Abstand angeordneten ersten Kaltluftdurchlassöffnungen sowie stromauf des Prallringblechs in dem rotationssymmetrischen Teil ausgebildete zweite Kaltluftdurchlassöffnungen. Die ersten und zweiten Kaltluftdurchlassöffnungen sind zur Zufuhr eines Kaltluftteilstroms zur Innen- oder Außenfläche des gewellten Teils des Blütenmischers wechselseitig verschließbar. Die Luftsteuereinrichtung umfasst weiterhin einen stromab an das Prallblech anschließenden Leitblechabschnitt. An das Prallringblech ist weiterhin ein als Luftleitelement zur Abzweigung des Kaltluftteilstroms dienendes, stromauf gerichtetes, umlaufendes Leitblech angeschlossen.

In weiterer Ausbildung der Erfindung schließt an das Prallringblech ein stromab gerichteter Leitblechabschnitt zur Führung des über die ersten Kaltluftdurchlassöffnungen zugeführten Kaltluftteilstroms an die Außenfläche des Blütenmischers an.

In Ausgestaltung der Erfindung bilden das Leitblech und der Leitblechabschnitt eine das Prallringblech ringförmig umfassende Abdeckhaube.

In weiterer Ausbildung der Erfindung sind ersten und zweiten Kaltluftdurchlassöffnungen versetzt zueinander angeordnet und durch an einem drehbaren Verschlussring versetzt angebrachte erste und zweite Verschlusslaschen wechselseitig verschließbar.

Ein Ausführungsbeispiel der Erfindung wird anhand der Zeichnung näher erläutert. Es zeigen:
- Fig. 1: eine schematische Darstellung eines Turbofantriebwerks mit langer Triebwerksgondel und einem Blütenmischer zum Vermischen des Kaltluftstroms mit dem Heißluftstrom;
- Fig. 2: eine Darstellung des Erfindungsprinzips mit einem durch den Kalt- und/oder Heißluftstrom kontrolliert radial nach innen oder außen ausgelenkten Blütenmischer;
- Fig. 3: eine perspektivische Darstellung eines Blütenmischers mit einer diesem zugeordneten Steuereinheit zur Kaltluftführung entlang der Außenfläche des Blütenmischers;
- Fig. 4: den Blütenmischer mit einer Steuereinheit gemäß Fig. 3, jedoch während der Kaltluftführung entlang der Innenfläche des Blütenmischers.

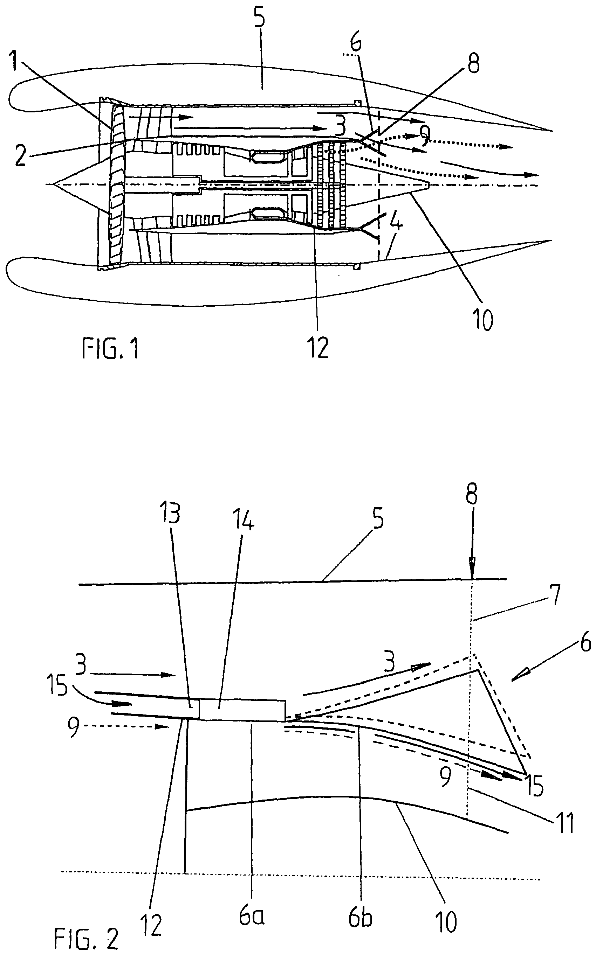

Wie Fig. 1 zeigt, wird der vom Fan 1 eines Turbofantriebwerks erzeugte Luftstrom an einem Strömungsteiler 2 aufgeteilt und gelangt zum einen über den Nebenstromkanal als Kaltluftstrom 3 in den zwischen der Innenwand 4 der Triebwerksgondel 5 und der Außenfläche des gewellten Teils 6b des Blütenmischers 6 liegenden Kaltstromquerschnitt 7 der Mischebene 8. Der im Kerntriebwerksgehäuse 12 geführte andere Teil des Luftstroms gelangt als Heißluftstrom 9 zu dem zwischen der Innenfläche des Blütenmischers 6 und dem Abgaskonus 10 liegenden Heißstromquerschnitt 11 der Mischebene 8. Das Mischungsverhältnis zwischen dem Kaltluftstrom 3 und dem Heißluftstrom 9 soll entsprechend dem Flugzustand durch radiale Bewegung der umlaufenden, gewellten - aus dünnwandigem elastischem Blech bestehenden - Wand des Blütenmischer 6 nach innen oder nach außen geändert werden können, um das Flattern des Fans zu verhindern, Triebwerksgeräusche zu minimieren oder den Schub zu beeinflussen.

Gemäß der in Fig. 2 gezeigten Prinzipdarstellung eines konzentrisch zwischen der Innenwand 4 der Triebwerksgondel 5 und dem Abgaskonus 10 angeordneten Blütenmischers 6 sind dem aufgrund seiner dünnwandigen Ausbildung radial nach außen oder innen verstellbaren gewellten Teil 6b des Blütenmischers 6 an dessen rotationssymmetrischen Teil 6a ein Luftleitelement 13 und eine Luftsteuereinrichtung 14 zugeordnet. Mit dem Luftleitelement 13 wird aus dem Kaltluftstrom 3 und/oder aus dem Heißluftstrom 9 kalte Luft aus dem Nebenstromkanal und/oder heiße Luft aus dem Kerntriebwerksgehäuse 12 abgezweigt und mit Hilfe der Luftsteuereinrichtung 14 gezielt auf die Innenfläche und/oder die Außenfläche des gewellten Blütenmischers 6 geleitet. In Abhängigkeit von der durch die Luftsteuereinrichtung 14 bewirkten unterschiedlichen Erwärmung bzw. Abkühlung der Innen- und der Außenfläche des Blütenmischers 6 bzw. dem Temperaturunterschied zwischen der Innen- und der Au-ßenfläche und der dementsprechend unterschiedlichen Dehnung bewegt sich der Blütenmischer 6 radial nach innen oder nach außen. Damit verändern sich der Kaltstromquerschnitt 7 und der Heißstromquerschnitt 11. Das heißt, eine Temperaturverringerung an der Innenfläche des Blütenmischers 6 bewirkt eine radiale Bewegung des Blütenmischers nach innen und eine Vergrößerung des Kaltstromquerschnitts 7 bzw. eine Verringerung des Heißstromquerschnitts 11. Andererseits führt eine stärkere Erwärmung der Innenfläche des Blütenmischers, wenn beispielsweise keine abgezweigte Kaltluft auf die Innenfläche des Blütenmischers 6 geleitet wird, aufgrund der vergleichsweise geringen Temperatur an der Außenfläche des Blütenmischers zu einer radialen Bewegung des Blütenmischers 6 nach au-ßen, so dass der Kaltstromquerschnitt 7 verringert wird und der Heißstromquerschnitt 11 entsprechend vergrößert wird.

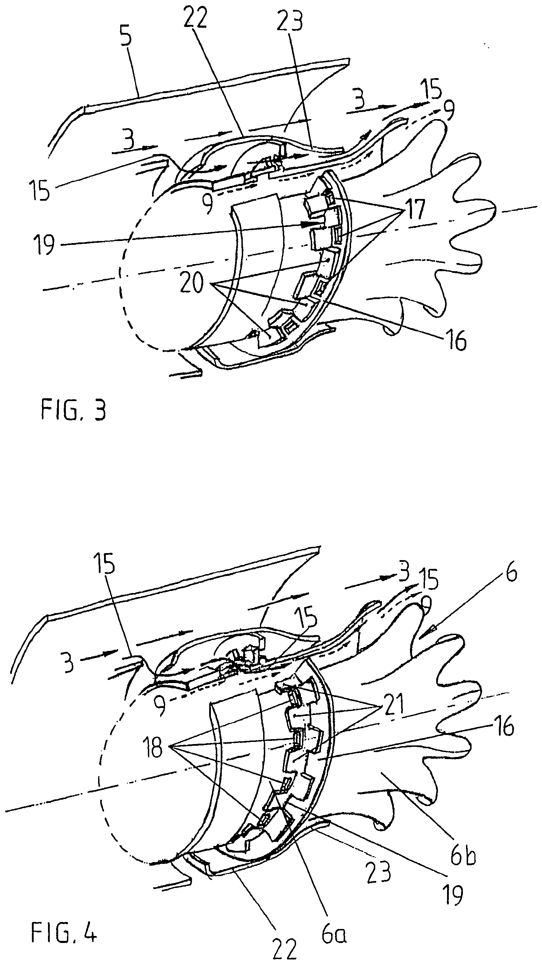

Die Figuren 3 und 4 zeigen ein spezifisches Ausführungsbeispiel der in Fig. 2 dargestellten allgemeinen Ausführungsform eines variablen Blütenmischers 6, dessen radiale Lage unter der Wirkung eines abgezweigten und entlang der Innenfläche des Blütenmischers 6 geführten Kaltluftteilstroms 15 des Kaltluftstroms 3 verändert wird. Die oben erwähnte Luftsteuereinrichtung 14 umfasst ein stromauf des Blütenmischers 6 an dessen rotationssymmetrisch ausgebildetem rotationssymmetrischen Teil 6a angebrachtes, in den Nebenstromkanal ragendes Prallringblech 16 mit in regelmäßigem Abstand ausgebildeten ersten Kaltluftdurchlassöffnungen 17 und jeweils versetzt zu diesen in der Wand des Kerntriebwerksgehäuses 12 stromauf des Prallringbleches 16 vorgesehenen zweiten Kaltluftdurchlassöffnungen 18. An dem Prallringblech 16 und dem Kerntriebwerksgehäuse 12 ist ein Verschlussring 19 drehbar gelagert, der im Abstand der ersten und zweiten Kaltluftdurchlassöffnungen 17, 18 winklig zueinander angeordnete erste und zweite Verschlusslaschen 20,21 umfasst. Der Verschlussring 19 kann so eingestellt werden, dass die ersten Verschlusslaschen 20 die ersten Kaltluftdurchlassöffnungen 17 oder die zweiten Verschlusslaschen 21 die zweiten Kaltluftdurchlassöffnungen 18 verschließen. Das oben erwähnte Luftleitelement 13 ist ein im Nebenstromkanal angeordnetes, stromauf an das Prallringblech 16 anschließendesLeitblech 22, mit dem aus dem Nebenstromkanal ein Kaltluftteilstrom 15 abgezweigt wird, der in Abhängigkeit von der Stellung des Verschlussringes 19 entweder durch die ersten oder die zweiten Kaltluftdurchlassöffnungen 17 oder 18 hindurch geleitet wird.

In der in Fig. 3 gezeigten Darstellung ist der Verschlussring 19 in einer die zweiten Kaltluftdurchlassöffnungen 18 verschließenden Position. Der stromauf der Luftsteuereinrichtung 14 über das Leitblech 22 abgezweigte Kaltluftleitstrom 15 strömt durch die ersten Kaltluftdurchlassöffnungen 17 und wird mithilfe des an das Leitblech 22 anschließenden Leitblechabschnitts 23 stromab des Prallringbleches 16 dicht über die Außenfläche des Blütenmischers geführt. Während der Heißluftstrom 9 die Innenfläche des Blütenmischers 6 erwärmt, wird gleichzeitig dessen Außenfläche gekühlt, so dass der Blütenmischer 6 in eine radial äußere Position ausgelenkt wird.

Fig. 4 zeigt die Luftsteuereinrichtung 14 in einem Zustand, in dem der Verschlussring 19 die ersten Kaltluftdurchlassöffnungen 17 verschließt und die zweiten Kaltluftdurchlassöffnungen 18 freigibt, so dass der aus dem Kaltluftstrom 3 über das Leitblech 22 abgezweigte Kaltluftteilstrom 15 entlang der Innenfläche des Blütenmischers 6 abströmen kann und dabei die ansonsten heiße Innenfläche des Blütenmischers 6 kühlt. Der Blütenmischer 6 wird dadurch allein aufgrund der Kühlwirkung des Kaltluftstroms 3 in eine von der Lage in Fig. 3 abweichende, radial nach innen ausgelenkte Position mit vergrößertem Kaltstromquerschnitt 7 und verringertem Heißstromquerschnitt 11 in der Mischebene 8 verstellt.

Die Erfindung ist nicht auf das zuvor erläuterte Ausführungsbeispiel beschränkt. Im Rahmen des Grundgedankens der Erfindung, wonach durch Abkühlung und/oder Erwärmung der Außen- oder Innenflächen des Blütenmischers mit dem Kalt- und/oder Heißluftstrom dessen radial nach innen oder außen gerichtete Verstellung und damit eine Änderung des Mischungsverhältnisse sowie eine Beeinflussung des Schubes, der Triebwerksgeräusche und des Fanflatterns vorgenommen werden kann, sind verschiedene, die Art der Kalt- oder Heißluftzufuhr zu den Innen- oder Außenflächen des Blütenmischers betreffende Modifikationen denkbar.

### Bezugszeichenliste

- 1: Fan
- 2: Strömungsteiler
- 3: Kaltluftstrom
- 4: Innenwand von 5
- 5: Triebwerksgondel
- 6: Blütenmischer (6a: rotationssymmetrischer Teil von 6; 6b: gewellter Teil von 6)
- 7: Kaltstromquerschnitt in 8
- 8: Mischebene
- 9: Heißluftstrom
- 10: Abgaskonus
- 11: Heißstromquerschnitt in 8
- 12: Kerntriebwerksgehäuse
- 13: Luftleitelement
- 14: Luftsteuereinrichtung
- 15: Kaltluftteilstrom
- 16: Prallringblech
- 17: erste Kaltluftdurchlassöffnungen
- 18: zweite Kaltluftdurchlassöffnungen
- 19: Verschlussring
- 20: erste Verschlusslaschen
- 21: zweite Verschlusslaschen
- 22: Leitblech
- 23: Leitblechabschnitt

## Patentansprüche

1. Verstellbarer Blütenmischer für ein Turbofantriebwerk zur Einstellung eines an den jeweiligen Flugzustand angepassten Mischungsverhältnisses zwischen dem Kaltluftstrom aus dem Nebenstromkanal und dem Heißluftstrom aus dem Kernstromkanal, **dadurch gekennzeichnet dass** der Blütenmischer einen dünnwandigen, gewellten Teil (6b), ein Luftleitelement (13, 22) und eine Luftsteuereinrichtung (14; 16, 19, 23) umfasst; dass das Luftleitelement (13; 22) stromauf des dünnwandigen, gewellten Teils (6b) des Blütenmischers (6) zum Abzweigen eines Kaltluftteilstroms aus dem Nebenstromkanal und/oder eines Heißluftteilstroms aus dem Kernstromkanal des Triebwerks angeordnet ist; und dass dem Luftleitelement (13; 22)die Luftsteuereinrichtung (14; 16, 19, 23) zur Führung des abgezweigten Kaltluft- oder Heißluftstroms entlang der Innenfläche und/oder der Außenfläche des Blütenmischers (6) zugeordnet ist, um dessen gewellten Teil (6b) aufgrund der durch den Heiß- und/oder Kaltluftteilstrom bewirkten Temperaturdifferenz zwischen der Innen- und der Außenfläche radial nach innen oder nach außen auszulenken.

2. Blütenmischer nach Anspruch 1, **dadurch gekennzeichnet, dass** die Luftsteuereinrichtung (14) ein vom rotationssymmetrischem Teil (6a) des Blütenmischers (6) im Wesentlichen winklig abstrebendes, umlaufendes Prallringblech (16) mit in regelmäßigem Abstand angeordneten ersten Kaltluftdurchlassöffnungen (17) sowie stromauf des Prallringblechs (16) in dem rotationssymmetrischen Teil (6a) ausgebildete zweite Kaltluftdurchlassöffnungen (18) umfasst, wobei die ersten und zweiten Kaltluftdurchlassöffnungen (17, 18) zur Zufuhr eines Kaltluftteilstroms (15) zur Innen- oder Außenfläche des gewellten Teils (6b) des Blütenmischers (6) wechselseitig verschließbar sind, sowie einen stromab an das Prallblech (16) anschließenden Leitblechabschnitt (23) aufweist, und an das Prallringblech (16) ein als Luftleitelement (13) zur Abzweigung des Kaltluftteilstroms (15) dienendes, stromauf gerichtetes umlaufendes Leitblech (22) angeschlossen ist.

3. Blütenmischer nach Anspruch 2, **dadurch gekennzeichnet, dass** an das Prallringblech (16) ein stromab gerichteter Leitblechabschnitt (23) zur Führung des über die ersten Kaltluftdurchlassöffnungen (17) zugeführten Kaltluftteilstroms (15) an die Außenfläche des Blütenmischers (6) anschließt.

4. Blütenmischer nach Anspruch 2 oder 3, **dadurch gekennzeichnet, dass** das Leitblech (22) und der Leitblechabschnitt (23) eine das Prallringblech (16) ringförmig umfassende Abdeckhaube bilden.

5. Blütenmischer nach Anspruch 2, **dadurch gekennzeichnet, dass** die ersten und zweiten Kaltluftdurchlassöffnungen (17, 18) versetzt zueinander angeordnet sind und durch an einem drehbaren Verschlussring (19) versetzt angebrachte erste und zweite Verschlusslaschen (20, 21) wechselseitig verschließbar sind.

## Claims

1. Adjustable bloom mixer for a turbofan engine for setting a mixing ratio, adapted to the respective flight condition, between the cold airflow from the bypass duct and the hot airflow from the core flow duct, **characterized in that** the bloom mixer includes a thin-walled, corrugated part (6b), an air-guiding element (13, 22) and an air control device (14, 16, 19, 23), that the air-guiding element (13, 22) is arranged upstream of the thin-walled, corrugated part (6b) of the bloom mixer (6) for branching off a cold partial airflow from the bypass duct and/ or a hot partial airflow from the core flow duct of the engine, and that the air control device (14, 16, 19, 23) is assigned to the air-guiding element (13, 22) for leading the branched-off cold airflow or hot airflow along the inner surface and/ or the outer surface of the bloom mixer (6) in order to deflect its corrugated part (6b) radially inwards or outwards because of the temperature difference between the inner and the outer surface effected by the hot and/ or cold partial airflow.

2. Bloom mixer in accordance with Claim 1, **characterized in that** the air control device (14) includes a circumferential baffle ring plate (16) projecting substantially at an angle from the rotationally symmetrical part (6a) of the bloom mixer (6) and having first cold air passage openings (17) arranged at regular intervals and second cold air passage openings (18) formed upstream of the baffle ring plate (16) in the rotationally symmetrical part (6a), with the first and second cold air passage openings (17, 18) being alternately closable for supplying a cold partial airflow (15) to the inner surface or the outer surface of the corrugated part (6b) of the bloom mixer (6), as well as a deflector plate section (23) adjoining the baffle plate (16) in the downstream direction, with a circumferential deflector plate (22) facing upstream and serving as an air-guiding element (13) to branch off the cold partial airflow (15) being connected to the baffle ring plate (16).

3. Bloom mixer in accordance with Claim 2, **characterized in that** a deflector plate section (23) facing downstream adjoins the baffle ring plate (16) for guiding the cold partial airflow (15) supplied via the first cold air passage openings (17) to the outer surface of the bloom mixer (6).

4. Bloom mixer in accordance with Claim 2 or 3, **characterized in that** the deflector plate (22) and the deflector plate section (23) form a covering hood surrounding the baffle ring plate (16) in ring form.

5. Bloom mixer in accordance with Claim 2, **characterized in that** the first and second cold air passage openings (17, 18) are arranged offset to one another and are alternately closable by first and second closure flaps (20, 21) fitted in offset form onto a rotatable closure ring (19).

## Revendications

1. Mélangeur variable en forme de fleur pour un turboréacteur à soufflante destiné à régler un rapport de mélange adapté à la condition de vol respective, entre le flux d'air froid provenant du canal de flux secondaire et le flux d'air chaud provenant du canal de flux primaire, **caractérisé en ce que** le mélangeur en forme de fleur comprend une partie ondulée à paroi mince (6b), un élément de guidage d'air (13, 22) et un dispositif de contrôle d'air (14, 16, 19, 23), que l'élément de guidage d'air (13, 22) est disposé en amont de la partie ondulée à paroi mince (6b) du mélangeur en forme de fleur (6) pour séparer un flux partiel d'air froid provenant du canal de flux secondaire et/ ou un flux partiel d'air chaux provenant du canal de flux primaire du réacteur, et que le dispositif de contrôle d'air (14, 16, 19, 23) destiné à guider le flux d'air froid ou d'air chaud séparé, le long de la surface intérieure et/ ou de la surface extérieure du mélangeur en forme de fleur (6) est associé à l'élément de guidage d'air (13, 22) afin de dévier radialement vers l'intérieur ou l'extérieur la partie ondulée (6b) dudit mélangeur en raison de la différence de température entre la surface intérieure et la surface extérieure, provoquée par le flux d'air chaud et/ ou le flux d'air froid.

2. Mélangeur en forme de fleur selon la revendication n°1, **caractérisé en ce que** le dispositif de contrôle d'air (14) comprend une tôle annulaire de chicane (16) circonférentielle, projetant essentiellement angulairement de la partie rotosymétrique (6a) du mélangeur en forme de fleur (6) avec des premières ouvertures de passage d'air froid (17) espacées régulièrement ainsi que des secondes ouvertures de passage d'air froid (18) constituées dans la partie rotosymétrique (6a) en amont de la tôle annulaire de chicane (16), sachant que les premières et secondes ouvertures de passage d'air froid (17, 18) sont refermables en alternance pour amener un flux partiel d'air froid (15) à la surface intérieure ou extérieure de la partie ondulée (6b) du mélangeur en forme de fleur (6), et présente une section de tôle déflectrice (23) jouxtant en aval la tôle de chicane (16), et qu'une tôle déflectrice (22) circonférentielle, dirigée vers l'amont, servant d'élément de guidage d'air (13) pour séparer le flux partiel d'air froid (15) est raccordée à la tôle annulaire de chicane (16).

3. Mélangeur en forme de fleur selon la revendication n° 2, **caractérisé en ce qu'**une section de tôle déflectrice (23) dirigée vers l'aval jouxte la tôle annulaire de chicane (16), pour guider le flux partiel d'air froid (15) amené à travers les premières ouvertures de passage d'air froid (17) à la surface extérieure du mélangeur en forme de fleur (6).

4. Mélangeur en forme de fleur selon la revendication n° 2 ou n° 3, **caractérisé en ce que** la tôle déflectrice (22) et la section de tôle déflectrice (23) forment un capot entourant dans une forme annulaire la tôle annulaire de chicane (16).

5. Mélangeur en forme de fleur selon la revendication n° 2, **caractérisé en ce que** les premières et secondes ouvertures de passage d'air froid (17, 18) sont disposées décalées les unes par rapport aux autres et sont refermables en alternance moyennant des premières et secondes languettes de fermeture (20, 21) positionnées décalées les unes des autres sur un anneau de fermeture (19) rotatif.
